Europäisches Patentamt

(19) European Patent Office

Office européen des brevets

(11) Publication number: **0 094 165**
**B1**

(12) **EUROPEAN PATENT SPECIFICATION**

(45) Date of publication of patent specification: **06.07.88**

(21) Application number: **83302318.7**

(22) Date of filing: **22.04.83**

(51) Int. Cl.⁴: **B 01 D 39/14**, **C 08 L 61/06**, **D 21 H 3/50**, **C 08 G 8/04**

54 Resin inpregnated filter papers.

(30) Priority: **27.04.82 GB 8212179**

(43) Date of publication of application:
**16.11.83 Bulletin 83/46**

(45) Publication of the grant of the patent:
**06.07.88 Bulletin 88/27**

(84) Designated Contracting States:
**DE FR GB IT SE**

(56) References cited:
**EP-A-0 005 533**
**EP-A-0 027 333**
**DE-A-2 909 830**
**DE-C-1 065 605**
**GB-A-1 023 881**

(73) Proprietor: **BORDEN (UK) LIMITED**
**North Baddesley**
**Southampton S05 9ZB (GB)**

(72) Inventor: **Lemon, Peter Herbert Richard Bryan**
**"Pandale" Newton Road**
**Sherfield English Nr Romsey Hants (GB)**
Inventor: **Swire, John Richard**
**2, Yew Tree Close Fair Oak**
**Eastleigh Hants (GB)**

(74) Representative: **Pennant, Pyers et al**
**5 Quality Court Chancery Lane**
**London WC2A 1HZ (GB)**

Courier Press, Leamington Spa, England.

## Description

This invention relates to a method of impregnating filter papers with resins to impart strength and rigidity. Normally, thermosetting synthetic resins in solution in alcohols are used to impregnate an open pore filter paper. The solvent is dried off and the resultant paper containing uncured or partially cured resin is pleated into a convoluted form, assembled into a final filter and caps or gaskets applied to each end. The final stage is to cure the thermosetting synthetic resin in the paper e.g. by placing it in a hot air circulating oven.

It has become the practice for automobile oil and air filter manufacturers to purchase paper and impregnate with thermosetting synthetic resin, dry off the solvent, pleat, assemble and cure in the one location. However, there is a recent tendency for paper manufacturers to undertake the impregnation and drying operations and sell the resultant dry but uncured paper to filter manufacturers who pleat assemble and carry out final cure.

This has led to a demand from the filter manufacturers for a paper impregnated with a cured resin but having such properties that it is possible to pleat the paper without fracture and still retain adequate stiffness and oil resistance. Moreover, paper manufacturers who impregnate paper with synthetic resin and dry off the solvent do not have suitable equipment to cure normal thermosetting resins. Thus, a further requirement is for the curing of the resin to take place during manufacture e.g. during the drying operation at the paper manufacturers.

The normal thermosetting synthetic resins used as impregnants for paper for oil and air filters for the automobile industry are phenol formaldehyde, melamine formaldehyde and poly-vinyl acetate modified phenol formaldehyde resins. It is possible to accelerate the cure of these resins by addition of acid, but the low pH used tends to cause the paper to disintegrate. Curing can also be accelerated by addition co-condensation of resorcinol, but this makes the resin very expensive and tends to make the final filter uneconomic. Epoxide resins crosslinked with either polyamines or polyamides will cure at drying temperatures and are currently used for the "post pleatable" or "non-cure" paper but because of their high cost they are restricted to specialist applications.

Resin impregnated filter papers and their use for making filters are disclosed in DE—A—2909830. According to this document, filter paper is impregnated with a resin formed by the alkali-catalysed condensation of phenol, formaldehyde and a diol. The impregnated paper is air dried and heated in a hot air circulating oven to achieve final cure.

We have now found a class of phenolic resins which can be crosslinked at ambient temperature or at only modestly elevated temperatures for relatively short times. The resins used in this invention cure under alkaline conditions, as is the case in DE—A—2909830 thus avoiding strongly acidic conditions used in certain prior art procedures previously. Furthermore, the impregnating system used in carrying out the invention is less expensive than either melamine formaldehyde or epoxide based systems used previously.

Accordingly, the present invention provides a method of making a resin impregnated filter paper which comprises providing a filter paper impregnated with an alkaline phenol-aldehyde resin having an aldehyde to phenol molar ratio of from 1:1 to 3.5:1 and curing the resin, characterised in that the alkaline phenol-aldehyde resin has an alkali to phenol molar ratio of from 0.1:1 to 1.5:1 and has a weight average molecular weight of from 200 to 4000 and in that the alkaline phenol-aldehyde resin is contacted with an ester, as catalyst, for curing the resin.

It is a particular advantage of the invention that filter paper impregnated with the phenol-aldehyde resin cured under ester catalysis, can be made to be pleatable i.e. filter blanks can be made which are "post pleatable". According to the present invention, the resin impregnated filter paper may be formed into the desired shape for the filter before, during or after curing the resin.

A variety of techniques are possible in making the paper filters and filter paper blanks of the invention. One simple technique is to form a mixture, in solution in a suitable solvent, of the resin and the ester catalyst and to impregnate the filter paper with the mixture and subsequently dry the impregnated paper. The paper can be pre-pleated or a blank for post pleating. Although this technique is simple, the reaction of the resin under ester catalysis is usually fairly rapid so that the mixture has a limited lifetime. With the more active esters the useful life of the mixture can be as short as 2 minutes although longer lifetimes can be obtained by using less active esters. The limited lifetime of the mixtures means that, in practical commercial operation, the mixture will be applied to the paper using a mix-metering machine which will pump metered quantities of the resin and ester solutions into a static or mechanical mixing head before application. The mixture can then be fed to a small impregnating bath in which the paper is totally immersed and the excess squeezed off with rollers. Alternatively, the mixed resin and ester solution can be fed onto horizontal or vertical rollers through which the paper is passed to kiss coat (or impregnate) from one or both sides. Another method is to spray the mixed solution onto the paper from one or both sides.

To avoid the problems arising from the short lifetime of such mixed resin-catalyst solutions, it is possible to apply the resin and catalyst separately to the paper. This can be done by using sequential applicators such as kiss coat rollers or sprays. Such techniques will usually be used where the process is run continuously and it will be usual to apply the resin solution to the paper followed by the ester in a short distance in such processes.

2

The application of resin and ester can be separated, especially by first impregnating the paper with resin solution and drying it to give a resin impregnated paper followed by contacting the paper with the ester to catalyse curing. This can be done by applying the ester in the liquid phase, preferably in solution, to the resin impregnated paper and thereafter drying the paper thereby promoting curing of the resin.

An alternative way of promoting curing of resin impregnated paper is to contact the paper with an ester in the vapour phase. The ester which is most useful in this technique is methyl formate. Methyl formate has a boiling point of 31.5°C and can, therefore, provide substantial concentrations of vapour at ambient temperature or a complete atmosphere of the vapour at only mildly elevated temperatures under ambient pressure. Other esters such as ethyl and propyl formates and methyl acetate may be useful in this technique but require elevated temperatures e.g. up to 100°C, to achieve useful concentrations of vapour. These and other relatively even more involatile esters could be used in a quasi-vapour phase technique by dispersing them as aerosols but care will be needed to ensure adequately even contact of the catalyst with the resin impregnated paper. In this method the resin impregnated paper will not normally be completely dried, or will be re-wetted, prior to contact with the vapour or aerosol of the ester as the curing reaction is generally faster in the presence of a solvent for the resin than in the solid phase.

Another way of carrying out the invention is to impregnate the filter paper during the paper making process. Typically this would be done by applying, e.g. by spraying a solution of the resin and a solution of the ester either, in a mixture or separately, to the partly dried paper formed from the pulped fibres, at the sizing box. Subsequently, the paper is dried by passing it over hot rollers which promote curing of the resin.

The invention is applicable to a wide range of papers for filters. The majority of paper oil and air filters have a cellulose paper as the filter element and the invention is particularly suited to such papers. However, the invention is applicable to papers made from other fibrous materials such as glass fibres, asbestos fibres, non-cellulosic organic fibres, including synthetic polymeric fibers, and to mixtures of fibres including mixtures with cellulosic fibres.

The phenol-aldehyde resins used in the invention are thermosettable resole resins manufactured by condensation of a phenol and an aldehyde under alkaline conditions. The preferred resins are made by condensation of phenol itself with formaldehyde. However, the phenol may be replaced in part or wholly by other phenols such as cresoles, xylenols, ethyl phenols and other substituted phenols such as are obtained from fractionation of coal tar and from cashew nut shell liquid, and the aldehyde may be acetaldehyde, butyraldehyde or furfuraldehyde in substitution for the formaldehyde, or a mixture of two or more such aldehydes.

The resins used have a weight average molecular weight ($\bar{M}_w$) of from 200 to 4000. Resins with $\bar{M}_w$ less than 200 are insufficiently condensed to provide the properties desired in the paper filtering even after curing and those with $\bar{M}_w$ greater than 4000 are so highly condensed that application to the paper and curing is difficult. Within this range the best results are obtained with resins with $\bar{M}_w$ of from 400 to 2000.

The resins have an alkali to phenol molar ratio of from 0.1:1 to 1.5:1. Resins with ratios less than 0.1:1 are insufficiently alkaline to permit satisfactory curing under ester catalysis and those with ratios greater than 1.5:1 are so alkaline that they may have a deleterious effect on the paper as well as being hazardous to handle. The preferred molar ratios are in the range 0.4:1 to 1.1:1. The resins are condensed under alkali catalysis. The total alkali in the resin as used in the invention may be present from the start of condensation or the condensations may be carried out with a part, usually only a small part, of the total alkali present with the remainder added to the resin after condensation. The alkali used as condensation catalyst can be an alkali metal hydroxide or alkali earth metal hydroxide or oxide. Examples include, sodium potassium and lithium hydroxides, barium and calcium hydroxides and magnesium oxide. Mixtures of alkalis can be used especially where one is used as a condensation catalyst and another to provide the remaining alkalinity to achieve the desired alkali to phenol molar ratio. Sodium, potassium and lithium hydroxides are preferred because they give resin solutions in solvents such as water and lower alcohols which are more stable.

The resins used in the invention have a molar ratio of aldehyde to phenol of from 1:1 to 3.5:1. Ratios outside this range do not produce satisfactory resins for use in the invention and higher ratios tend to give unacceptable levels of free aldehyde in the resin which, especially where the aldehyde is formaldehyde, is undesirable. Preferably the ratio is in the range 1.2:1 to 2.5:1.

In a subsidiary aspect of the invention the resin used is a alkaline phenol formaldehyde resin having $\bar{M}_w$ of from 400 to 2000 an alkali to phenol molar ratio of from 0.4:1 to 1.1:1, the alkali being sodium and/or potassium hydroxide, and a formaldehyde to phenol molar ratio of from 1.2:1 to 2.5:1.

The catalyst for the curing reaction of the resin is one or more esters. A wide range of esters can be used including aromatic esters, straight or branched chain or cyclic aliphatic, especially alkyl, esters such as methyl, ethyl and propyl formates, methyl and ethyl acetates, ethylene glycol diacetate and triacetin, lactones such as butyrolactone, caprolactone and valerolactone, other cyclic esters such as ethylene carbonate and propylene carbonate. The amount of ester used is typically from 10 to 50%, preferably 15 to 40%, by weight based on the organic solids content of the resin. The amount in any particular case depends on the molar proportions of alkali, phenol and aldehyde and where the resin is in solution, the solids content of the resin. Additionally, for esters of a given type the lower molecular weight compounds tend to be the more active.

In most modes of the method the resin and/or the catalyst are dissolved in a solvent. The nature of the solvent is not critical to the invention provided it does not interfere with the curing reaction and is sufficiently volatile to be evaporated from the product. The resin is made in aqueous solution and can be used as such where the ester is not mixed with it directly. Where the ester and resin are in contact in solution, as will usually be the case except where the ester is in the vapour phase, it is desirable to ensure co-solution. Esters are commonly not very soluble in water and suitable solvents and co-solvents are lower especially $C_1$ to $C_3$ alcohols, especially methanol, ethanol and isopropanol. Methanol is particularly preferred because of its low cost and high volatility.

The curing reaction of the resin under ester catalysis is normally fairly rapid even at ambient temperature. Thus, with ethylene carbonate as catalyst, after drying a filter paper, impregnated with a mixture resin and catalyst, at 40°C for 2 to 3 hours the resin has undergone a substantial curing reaction. The use of more elevated temperatures can be used to speed curing and/or to effect more complete curing of the resin. We have found that heating for a few minutes e.g. 5 minutes at temperatures of about 100°C, is adequate generally to complete curing of a previously dried catalysed resin impregnated paper.

The following Examples illustrate the invention. All parts and percentages used herein are by weight unless otherwise indicated. The resin synthesis and test methods used in the Examples are as follows.

Synthesis of resins
Resin solution A

94 parts by weight of phenol (1 mole) were dissolved in 94 parts by weight 50% aqueous KOH solution (0.825 mole). The solution was heated to 90°C and 120 parts of 50% aqueous formaldehyde solution (2 mole) slowly added. After completion of the addition the temperature was maintained until the viscosity of a sample of reaction mixture was 100 cP measured at 25°C. The reaction mixture was rapidly cooled to ambient temperature. The final viscosity of this resin solution was 150 cP at 25°C; the formaldehyde; phenol molar ratio was 2; the alkali: phenol molar ratio was 0.825; the resin had a $\bar{M}_w$=950; and a solids content of 64% by weight. This solution is Resin Solution A.

B Resin solution B

94 parts of phenol (1 mole) were reacted with 108 parts 50% formaldehyde solution in the presence of a catalytic amount of sodium hydroxide (the reaction mixture had a pH of 9). The reaction mixture was refluxed to condense the phenol and formaldehyde and water was stripped from the mixture to give a resin solution having a viscosity of 70 cP at 25°C at a solids content of 78%. 66.4 parts of this solution were dissolved in 33.6 parts of 50% KOH solution, and the reaction continued until the viscosity was 650 cP at 25°C; the formaldehyde; phenol molar ratio was 1.8: the alkali:phenol molar ratio was 0.83; the resin had a $\bar{M}_w$=2900; and the solids content was 66.6%

This solution is resin solution B.

Tests on the impregnated paper mde in the Examples were carried out as follows:

Paper weight

A sample of paper was weighed and its area determined. The paper weight (grammage) was expressed in $gm^{-2}$.

Stiffness

Measured on a Gurley stiffness tester on a 2×1 inch (5×2.5 cm) specimen in the direction of the paper making machine. The result is expressed as the force in milliNewtons (mN), needed to fold the paper. Stiffness was measured before and after curing of the resin.

Bursting strength

Measured on a Mullen Burst Tester on a specimen 1.2 in² (7.74 cm²) in area. The result is expressed as the pressure in kPa to rupture the specimen. The test is carried out before and after curing the resin and on specimens which were first boiled in water containing 0.1% of a sodium lauryl sulphate type surfactant (Teepol), to obtain "Wet Burst" strength data.

Methanol extract

A sample of paper with cured resin was extracted by boiling methanol for 4 hours in a Soxhlet extractor. The result is expressed as the percent by weight of the sample extracted.

For those Examples in which the filter paper is impregnated with a solution including resin and catalyst the useful life of the impregnation solution (solution life) was assessed. Stiffness and burst strength (wet and dry) tests were carried out on the dried impregnated papers and on papers after curing at 100°C for 5 minutes.

The test results on filter papers impregnated as described in Examples 1 to 8 below are set out in Table 1.

Example 1

3.3 parts of resin solution A were dissolved in 19.5 parts of methanol. Separately a solution of 0.7 parts

4

of ethylene carbonate in 1 part water and 1.3 parts methanol was made up. A full flow oil filter paper (from Evans Adlard and Co., Ltd). was impregnated by hand in a tray using a mixture of 22.8 parts of the methanolic solution of resin solution A and 3 parts of ethylene carbonate solution. The impregnated filter paper was dried at 40°C for about 3 hours. The impregnated paper had a resin content of about 27%. The impregnation mixture had a useful life of 2—3 minutes and would be applied, on a commercial scale, using a mix-metering applicator.

Example 2

22.8 parts of a methanolic solution of resin solution A, prepared as described in Example 1, was mixed with 3 parts of a solution of 0.7 parts propylene carbonate in 2.3 parts methanol.

A filter paper was impregnated as described in Example 1 and dried at 40°C for 3 hours.

Example 3

Exampe 1 was repeated, but substituting 0.7 parts of butyrolactone for the ethylene carbonate used in Example 1.

Example 4

Example 1 was repeated, but substituting 3 parts of a solution of 2.1 parts triacetin in 0.9 parts methanol for the solution of ethylene carbonate used in Example 1.

Example 5

Example 1 was repeated, but substituting 0.7 parts of dimethylcarbonate for the ethylene carbonate used in Example 1.

Example 6

Example 1 was repeated, but substituting 0.7 parts of methyl acetate for the ethylene carbonate used in Example 1.

Example 7

A sample of filter paper was impregnated with a solution of 3.3 parts of resin solution A in 19.5 parts methanol, without catalyst. The sample was then suspended in a drum, at the bottom of which was a layer of liquid methyl formate. The methyl formate was evaporated, by blowing air onto its surface, to fill the drum with vapour. After 5 minutes immersion in the vapour, the sample of filter paper was then removed and dried for about 3 hours at 40°C.

Example 8

Example 7 was repeated, but substituting a mixture of 2.8 parts resin solution B and 2.0 parts water for the methanolic solution of resin solution A used in Example 7.

TABLE 1

| Example | 1 | 2 | 3 | 4 | 5 | 6 | 7 | 8 |
|---|---|---|---|---|---|---|---|---|
| Solution life (min) | 2 | 2 | 10.5 | 21 | 41 | 58 | N/A | N/A |
| Grammage (g) | 146 | 146 | 137 | 157 | 137 | 138 | 135 | 146 |
| Stiffness (mN) | 43.2 | 44.1 | 32.4 | 33.3 | 44.1 | 45.1 | 33.3 | 28.4 |
| Stiffness after cure (mN) | 49.0 | 50.0 | 39.2 | 48.1 | 46.1 | 48.1 | 33.3 | — |
| Burst strength (kPa) | 335 | 270 | 258 | 326 | 180 | 184 | 132 | 205 |
| Burst strength after cure (kPa) | 210 | 234 | 237 | 290 | 150 | 175 | 96 | — |
| Wet burst (kPa) | 215 | 230 | 150 | 180 | 55 | 90 | 85 | 100 |
| Wet burst after cure (kPa) | 260 | 230 | 195 | 265 | 145 | 126 | 115 | — |
| Methanol extract (%) | 6.7 | 7.9 | 14.3 | 15.3 | 19.6 | — | 15.6 | 11.2 |
| Resin content (approx. %) | 27 | 27 | 23 | 32 | 23 | 23 | 21 | 26 |

5

Claims

1. A method of making a resin impregnated filter paper which comprises providing a filter paper impregnated with an alkaline phenol-aldehyde resin having an aldehyde to phenol molar ratio of from 1:1 to 3.5:1 and curing the resin, characterised in that the alkaline phenol-aldehyde resin has an alkali to phenol molar ratio of from 0.1:1 to 1.5:1 and has a weight average molecular weight of from 200 to 4000 and in that the alkaline phenol-aldehyde resin is contacted with an ester, as catalyst, for curing the resin.

2. The method according to claim 1, wherein the phenol component of the alkaline-phenol-aldehyde resin is selected from phenol, cresoles, xylenols, ethyl phenols and substituted phenols obtained from fractionation of coal tar and from cashew nut shell liquid, and mixtures thereof.

3. The method according to claim 2, wherein the phenol component of the alkaline phenol-aldehyde resin is phenol itself.

4. The method according to any one of claims 1 to 3, wherein the aldehyde component of the alkaline phenol-aldehyde resin is selected from formaldehyde, acetaldehyde, butyraldehyde, furfuraldehyde and mixtures thereof.

5. The method according to claim 4, wherein the aldehyde component of the alkaline phenol-aldehyde resin is formaldehyde.

6. The method according to any one of claims 1 to 5, wherein the alkaline phenol-aldehyde resin has a weight average molecular weight of from 400 to 2000.

7. The method according to any one of claims 1 to 6, wherein the alkaline phenol-aldehyde resin has an alkali to phenol molar ratio of from 0.4:1 to 1.1:1.

8. The method according to any one of claims 1 to 7, wherein the alkaline phenol-aldehyde resin has an aldehyde to phenol molar ratio of from 1.2:1 to 2.5:1.

9. The method according to claim 1, wherein the alkaline phenol-aldehyde resin is an alkaline phenol-formaldehyde resin having a weight average molecular weight of from 400 to 2000, an alkali to phenol molar ratio of from 0.4:1 to 1.1:1, the alkali being sodium and/or potassium hydroxide, and a formaldehyde to phenol molar ratio of from 1.2:1 to 2.5:1.

10. The method according to any one of claims 1 to 9, wherein the ester is selected from methyl formate, ethyl formate, propyl formate, methyl acetate, ethyl acetate, ethylene glycol diacetate, triacetin, butyrolactone, caprolactone, valerolactone, ethylene carbonate, propylene carbonate, dimethyl carbonate and mixtures thereof.

11. The method according to any one of claims 1 to 10, wherein the ester is used in an amount of from 10 to 50% by weight based on the organic solids content of the resin.

12. The method according to claim 11, wherein the ester is used in an amount of from 15 to 40% by weight based on the organic solids content of the resin.

13. A method according to any one of claims 1 to 12 wherein before, during or after curing the resin, the resin impregnated filter paper is formed into the desired shape for the filter.

Patentansprüche

1. Verfahren zur Herstellung eines imprägnierten Filterpapiers, bei dem man ein Filterpapier mit einem alkalischen Phenol-Aldehydharz mit einem Aldehyd zu Phenol Molverhältnis von 1:1 bis 3,5:1 imprägniert und das Harz härtet, dadurch gekennzeichnet, daß das alkalische Phenol-Aldehydharz ein Alkali zu Phenol Molverhältnis von 0,1:1 bis 1,5:1 und ein gewichtsdurchschnittliches Molekulargewicht von 200 bis 4000 hat, und daß alkalische Phenol-Aldehyharz zum Härten des Harzes mit einem Ester als Katalysator in Berührung gebracht wird.

2. Verfahren gemäß Anspruch 1, bei dem die Phenolkomponente des alkalischen Phenol-Aldehydharzes aus Phenol, Kresolen, Xylenolen, Ethylphenolen und substituierten Phenolen, die durch Fraktionieren von Kohleteer und von Cashew-Nußschalenflüssigkeit erhalten wurden und von Mischungen daraus ausgewählt ist.

3. Verfahren gemäß Anspruch 2, bei dem die Phenolkomponente des alkalischen Phenol-Aldehydharzes Phenol selbst ist.

4. Verfahren gemäß einem der Ansprüche 1 bis 3, bei dem die Aldehydkomponente des alkalischen Phenol-Aldehydharzes aus Formaldehyd, Acetaldehyd, Butyraldehyd, Furfuraldehyd und Mischungen daraus ausgewählt ist.

5. Verfahren gemäß Anspruch 4, bei dem die Aldehydkomponente des alkalischen Phenol-Aldehydharzes Formaldehyd ist.

6. Verfahren gemäß einem der Ansprüche 1 bis 5, bei dem das alkalische Phenol-Aldehydharz ein gewichtsdurchschnittliches Molekulargewicht von 400 bis 2000 hat.

7. Verfahren gemäß einem der Ansprüche 1 bis 6, bei dem das alkalische Phenol-Aldehydharz ein Alkali zu Phenol Molverhältnis von 0,4:1 bis 1,1:1 hat.

8. Verfahren gemäß einem der Ansprüche 1 bis 7, bei dem das alkalische Phenol-Aldehydharz ein Aldehyd zu Phenol Molverhältnis von 1,2:1 bis 2,5:1 hat.

9. Verfahren gemäß Anspruch 1, bei dem das alkalische Phenol-Aldehydharz ein alkalisches Phenol-Formaldehydharz mit einem gewichtsdurchschnittlichen Molekulargewicht von 400 bis 2000 und einem Alkali zu Phenol Molverhältnis von 0,4:1 bis 1,1:1 ist, das Alkali Natrium- und/oder Kaliumhydroxid ist, und das Formaldehyd:Phenol Molverhältnis 1,2:1 bis 2,5:1 ist.

10. Verfahren gemäß einem der Ansprüche 1 bis 9, bei dem der Ester aus Methylformiat, Ethylformiat, Propylformiat, Methylacetat, Ethylacetat, Ethylenglykolidiacetat, Triacetin, Butyrolacton, Caprolacton, Valerolacton, Ethylencarbonat, Propylencarbonat, Dimethylcarbonat und Mischungen davon ausgewählt ist.

11. Verfahren gemäß einem der Ansprüche 1 bis 10, bei dem der Ester in einer Menge von 10 bis 50 Gew.-%, bezogen auf den organischen Feststoffgehalt des Harzes, verwendet wird.

12. Verfahren gemäß Ansrpuch 11, bei dem der Ester in einer Menge von 15 bis 40 Gew.-%, bezogen auf den organischen Feststoffgehalt des Harzes, verwendet wird.

13. Verfahren gemäß einem der Ansprüche 1 bis 12, bei dem während oder nach der Härtung des Harzes das harzimprägnierte Filterpaper in die gewünschte Form für das Filter geformt wird.

**Revendications**

1. Procédé de fabrication d'un papier filtre imprégné de résine qui consiste à disposer d'un papier filtre imprégné d'une résine phénolaldehyde alcaline ayant un rapport molaire aldehyde:phénol de 1:1 à 3,5:1 t à durcir la résine, caractérisé en ce que la résine phénol-aldéhyde alcaline présente un rapport molaire alkali-phénol de 0,1:1 à 1,5:1 et un poids moléculaire moyen de 200 à 4000 et en ce que la résine phénol-aldéhyde alcaline est mise au contact d'un ester en tant que catalyseur pour durcir la résine.

2. Procédé selon la revendication 1 selon lequel le composant phénol de la résine phénol-aldehyde alcaline est choisi parmi le phénol, les crésols, les xylénols, les éthyl-phénols et les phénols substitués obtenus par fractionnement du goudron de houille et du liquide de coquilles de noix d'acajou et de leurs mélanges.

3. Procédé selon la revendication 2, selon lequel le composant phénol de la résine phénol aldéhyde alcaline est du phénol lui-même.

4. Procédé selon l'une quelconque des revendications 1 à 3, selon lequel le composant aldéhyde de la résine phénol-aldéhyde alcaline est choisi parmi le formaldéhyde, l'acétaldéhyde, le butyraldéhyde, le furfuraldéhyde et leurs mélanges.

5. Procédé selon la revendication 4, selon lequel le composant aldéhyde de la résine phénol-aldéhyde alcaline est du formaldéhyde.

6. Procédé selon l'une quelconque des revendications 1 à 5, selon lequel la résine phénol-aldéhyde alcaline possède un poids moléculaire moyen de 400 à 2000.

7. Procédé selon l'une quelconque des revendications 1 à 6 selon lequel la résine phénol-aldéhyde alcaline présente un rapport molaire alcali:phénol de 0,4:1 à 1,1:1.

8. Procédé selon l'une quelconque des revendications 1 à 7 selon lequel la résine phénol aldéhyde alcaline possédé un rapport molaire aldéhyde-phénol de 1,2:1 à 2,5:1.

9. Procédé selon la revendication 1 selon lequel la résine phénol-aldéhyde alcaline ayant un poids moléculaire moyen de 400 à 2000, un rapport molaire alcali:phénol de 0,4:1 à 1,1 l'alcali étant de l'hydroxyde de sodium et/ou de potassium, et un rapport molaire formaldehyde-phénol de 1,2:1 à 2,5:1.

10. Procédé selon l'une quelconque des revendications 1 à 9, selon lequel l'ester est choisi parmi le formiate de méthyle, le formiate, l'éthyle, le formiate de propyle, l'acétate de méthyle, l'acétate d'éthyle, le diacétate d'éthylène glyvol, la triacétine, la butyrolactone, le caprolactone, le valerolactone, le carbonate d'éthylène, le carbonate de propyle, le diméthylcarbonate et leurs mélanges.

11. Procédé selon l'une quelconque des revendications 1 à 10, selon lequel l'ester est utilisé selon une quantité de 10 à 50 % en poids sur la base de la teneur en solides organiques de la résine.

12. Procédé selon la revendication 11, selon lequel l'ester est utilisé selon une quantité de 15 à 40 % en poids sur la base de la teneur en solides organiques de la résine.

13. Procédé selon l'une quelconque des revendications 1 à 12, selon lequel avant, pendant ou après le durcissement de la résine, le papier filtre imprégné de résine est conformé à la forme désirée pour le filtre.